# EUROPEAN PATENT APPLICATION

(11) **EP 1 361 524 A1**
(43) Date of publication of application: **12.11.2003**
(21) Application number: 02010324.8
(22) Date of filing: 07.05.2002
(51) Int. Cl.: G06F 17/30

(54) **Method and system for processing classified advertisements**

(71) Applicant: Publigroupe SA, 1002 Lausanne (CH)
(72) Inventor: Brouze, Gabriel-Antoine, 74500 Publier (FR); Durand, Didier, 25370 Jougne (FR); Rey, Didier, 1610 Vuibroye (CH); Sarrasin, Maurice, 1920 Martigny (CH); Vuattoux, Jean-Luc, 74500 Amphion-les-Bains (FR)
(74) Representative: Saam, Christophe

(57) **Abstract**

Method for preparing classified advertisements for publication in printed media, comprising the steps of:
capturing (112) at least the textual content (30) of each classified advertisement expressed in natural language,
automatically classifying and extracting (120-124) a plurality of data units (480) out of said textual content (30) and storing each data unit into a corresponding field of a record (48) in an electronic database (9),
using said database for determining the textual content, the layout and/or the position of the classified advertisement in said printed media.

## Description

The present invention relates to a method and a system for preparing and managing classified advertisements before and after the publication in printed media. The present invention relates in particular to a method that can be used by an advertising management company, i.e. a company active in the sale of advertising space, for capturing and managing classified advertisements. The present invention also relates to a computer program product with specific data dictionaries and specific data patterns stored on a computer-usable medium, such as a magnetic, an optical or a magneto-optical storage medium, and comprising computer-readable program means for causing said computer to capture and manage classified advertisements.

Various ways are known for capturing classified advertisements before publication. Many advertising customers, for example individuals, companies or advertising agencies, send the text of the advertisement per fax, phone or e-mail to an advertising management company that collects advertisements from different customers, formats them, bills the customer and dispatches the formatted advertisements to one or several publishers of the media selected by the customer. The textual content of the advertisement is usually entered in natural language, without restrictions to the syntax or vocabulary which can be used, sometimes in free text mode using a paper or online form.

Other advertising customers send to the advertising management company an advertisement that is already laid-out, for example an image-type computer file or a computer file created with a layout software, or a paper document that will be scanned before being sent to the selected media. Internet sites are also known that enable advertisers to enter a text and then to send it to the advertising management company through the Internet network. Those online virtual desks cannot offer the advice and feedback that one expects from an experienced desk clerk or from an agent in a call-center. Unrealistic or incomplete advertisements may be entered in an online desk that would be objected to by a human operator. Thus, customers may encounter more difficulties in editing and entering their classified advertisements.

Moreover, virtual desks are only effective for editing and transmitting the textual content of the classified advertisement to the advertising management company. They are not of any help for extracting structured content out of the data, nor for analyzing or reusing effectively the captured advertisement. Indeed, advertising management companies usually do not store classified advertisements in a structured way in a database and therefore can hardly use the content of the advertisements for statistical analyses or for finding more information about markets for example. Billing of the classified advertisement, for instance, usually depends on the size of the advertisement and on the section selected for publication, but is independent on the content of the advertisement.

Whatever the means used for transmitting the advertisement orders to the advertising management company, in view of the variety of classified advertisements, of the diversity of the products and services offered and of the willingness of many advertising customers to differentiate their advertisement from other advertisements for similar items, it is difficult to force advertisers to use precise forms for entering the advertisement texts in a structured manner. For a maximal publicity impact, the advertisers in fact wish to use a free language and not be restricted by forms containing fields that are too specific.

It is an object of the present invention to propose a method and system enabling advertising management companies and publishers on the one hand to make the capture of the advertisement easier and on the other hand to subsequently exploit the textual content of the advertisement.

It is also an object of the invention to provide a system and a method for extracting structured records out of classified advertisements.

It is also an object of the invention to provide a system for extracting structured records out of classified advertisements that continuously improves its performance by itself, by completing its dictionaries and improving the syntactic rules using previously extracted advertisements

It is also an object of the invention to provide a system and a method for managing and exploiting the textual content of classified advertisements captured in a variety of different ways, including paper orders.

Firms in the fields of advertising, and more particularly firms processing classified advertisements, would benefit from such a technical system and method because they could improve their productivity and even diversify their activities by reusing the data contained in the classified advertisements.

In particular, the system and method should make easier the preparation of classified advertisements, and establish statistics on advertisements captured in a variety of different ways.

According to the invention, those problems have been solved with a system and a method including the features of the corresponding independent claims.

More specifically, those problems have been solved with a new method for preparing a classified advertisement for publication in printed media, comprising the steps of capturing at least the textual content of a classified advertisement expressed in natural language, automatically extracting a plurality of data units out of said textual content and storing said data units into a corresponding field of a record in an electronic database, and using said database for determining the textual content, the layout and/or the position of said classified advertisement in said printed media.

Several conventional systems and methods have been developed for extracting and processing textual data from texts expressed in natural language. At least since the advent of the Internet, companies are aware of the potential of data exploitation and they have begun developing databases performing this task. Conventional systems have been developed which are useful for classifying data and extracting key information.

Existing multi-purpose data extraction systems are however poorly adapted for processing specific data such as the data found in classified advertisements. They do not exploit any a-priori knowledge of the possible contents and structures of classified advertisements. In particular, they do not use the fact that classified advertisements use only a restricted lexicon and can be classified into a limited number of categories. Thus, existing systems are ineffective for determining the textual content, the layout and/or the position of classified advertisements in printed media.

Using an extraction system specifically adapted for advertisements enables for instance computer-aided advertisement editing, for example by giving similar examples or templates taken in the database of previously extracted advertisements.

Extraction systems specifically adapted for processing classified advertisements are already known, in which the parsing is based on a category of advertisement entered by the customer or by the editor of the newspaper. However, because of the great number of advertisements often published in each edition of a particular newspaper, this process requires considerable manpower just for classifying the advertisements. Furthermore, the selected classification tends to vary depending on the particular person classifying the advertisement.

Other systems for extracting structured records from classified advertisements are known which can generate and update an advertisement database from preprocessed advertisement files in the same form as used by the newspaper in creating printed classified advertisements. World Wide Web users can access the advertisement database over the Internet in order to search advertisements published in one or several newspapers. However, those systems which can only process formatted, ready-for-publication advertisements do not assist the user or the newspaper editor during the preparation of the printed advertisement. Furthermore, as the advertisement files fed to those systems have already been preprocessed by other means, they often rely on different assumptions about the format, structure and layout of the advertisements, which make them only poorly adapted for extracting data units out of unprocessed advertisements expressed in a natural language by different customers. Usually, even if the classified advertisement records extracted from various newspaper publishers can be transferred over the Internet to a central advertisement database, a different extraction system is provided by each newspaper, which is specifically adapted to the format of the preprocessed advertisement files used by this newspaper. However, the costs involved in the acquisition and maintenance of a different extraction system in each newspaper are very high.

Existing extraction systems use predefined extraction rules and dictionaries for processing the advertisements. The definition of those rules and dictionaries is a very time-consuming task. Furthermore, the vocabulary and even the syntax and the writing style used in advertisements change even more often than in other types of articles or texts. Existing systems are thus rapidly becoming less reliable and need a manual adaptation of the extraction rules and of the dictionaries to adapt them to changing rules.ln contrast, the system of the invention is self-adaptive and uses previously extracted advertisements to continuously adapt its dictionaries by adding new words or expressions, creating new associations between words and advertisements categories, and improving the syntactic rules used by the system.

The method and system of the invention further enables user assistance for data capture. After having structured and extracted the textual content of the advertisement, the system can check if some key data are missing. If need be, it makes it possible to capture missing data and it restructures the new version of the advertisement.

The system of the invention preferably includes a check module for testing the integrity of the data. If one field contains data that seem unrealistic - such as too high a price for an item - the system may allow the customer to change it and replace it with more realistic data, for example by values in a range proposed by the system. The proposed range may come from a market analysis ,from the statistics computed by the system or from the value of other extracted fields.

The method and system of the invention further enables to normalize the data units and possibly the layout in the advertisements records, for example in order to write or store similar data in the same way (e.g. words written in capital letters in small letters like LTD or Ltd, entire words or abbreviations such as "resp." and "responsible", 2000fr and 2,000 Frs).

The method and system of the invention further enables to filter out prohibited or unwanted advertisements. Indeed, publishers can choose not to publish advertisements with specific contents (such as racist or pornographic features for instance). Thus the system of the invention registers their filtering criteria and stores the prohibited or unwanted advertisements under a special category, enabling publishers not to publish these advertisements but to keep a track of them.

Since the system structures and "understands" the content of the advertisements, the method and system of the invention further enables to provide extra information about them (for instance a technical data sheet of a vehicle or geographical location information for a real estate advertisement).

The method and system of the invention further enables to translate automatically the advertisements into several languages. The translation is assisted by the structuring and the normalization of the advertisements, and by the knowledge of the specific category and domain of the advertisement, allowing a selection of translated words among a restricted lexicon.

The method and system of the invention further enables to search efficiently previously published advertisements, and to make queries by fields, for instance in order to retrieve advertisements concerning 1999 cars of the make XY.

The method and system of the invention further enables to compute statistics of published advertisements, which can be used among others for marketing purposes. Since the advertisements are structured and stored, finely tuned statistics on the different fields may be performed, for example in order to compute the general profile of the advertisers or the new trends of a second-hand automotive market. These statistics can also be used as guidance in the advertisement capture process mentioned above.

The methods and system of the invention further enables an automated personalized layout of the advertisement, which can depend on the selected publisher. The system can process requests from various publishers for specific presentation of the advertisements, and create automatically a personalized presentation. The presentation may include a special sorting of the advertisements (by category or other criterion), with an emphasis on some data (bold, italic, etc.) or with a specific structure of the sentence (e.g.: make of the vehicle at the beginning of the sentence).

The method and system of the invention further enable to produce, from a single advertisement entered by a consumer, a plurality of offline and/or online advertisements with different layouts corresponding to the requirements of the different media selected for publication by the consumer.

The method and system of the invention further enable to classify a single advertisement for several items in different categories corresponding to the different items mentioned in the advertisement.

The method and system of the invention further enables an automated matching of the "want advertisements" with "sell advertisements". Indeed the system is able to analyze and understand the content of an advertisement. Thus it can check which advertisements have similar key data (e.g. same words or synonyms) or similar fields and it can match them. Thus, a contact may be established between buyers and sellers of a particular item for instance.

In the present specification and claims, the expression "classified advertisement" designates any kind of advertisement published or intended to be published along with others of the same purpose or category in a particular section of a printed media, such as a newspaper or magazine, or of an electronic media, such as a web or wap site. Classified advertisements are often used for buy-sell transactions, for the leasing or renting of real or personal property, for employment, for the offering of services and for miscellaneous other matters. Buy-sell advertisement sections often include several sections for the various categories of items offered for sale or buy, e.g. vehicles, electronics, etc. Most classified advertisements include a description of the items offered and a phone number or another information permitting the reader to contact the advertiser. Classified advertisements are usually brief and set in small types, without illustrations or only with simple black and white illustrations.

In the present specification and claims, printed media include newspapers and magazines. In a preferred embodiment, the method and system of the invention is also adapted to electronic media, for example a particular web or wap site, a teletext system, a SMS broadcasting system, and any other suitable mobile technology.

In the present specification and claims, electronic processing system designates any kind of computer or computing system, including personal computers, servers, computer networks, palmtops, PDA, and the like.

In the present specification and claims, the textual content of a classified advertisement is to be understood as a string of characters, or a set of strings of characters, corresponding to the text part of the advertisement, without any illustrations. Depending on the embodiment, the textual content may or may not include layout information, for example tags indicating the font, size and position set for each portion of the string.

The extraction process may however also use the graphical content of the classified advertisement entered by the consumer. This graphical content may be scanned and/or converted to text with a suitable optical character recognition program for extracting supplementary data units stored in the database, for improving the classification process of the advertisement or for improving the extraction process of other data units. For instance, the classified advertisement entered by the consumer may include a logo which can be stored in a graphic form in an appropriate field of a record in the advertisement database, which can be converted to text and stored in a text field, and/or which can be recognized as such with a graphic recognition module for improving the classification of the advertisement.

In the present specification and claims, an advertisement expressed in natural language is an advertisement in which the customer is at least free to choose his vocabulary and syntax, the type of features of the items described in the advertisement, and the order in which the features are introduced.

These and other objects and advantages of the invention, as well as the details of an illustrative embodiment, will be more fully understood from the following specification and drawings, in which:
Figure 1 is a schematic diagram illustrating how the customers and publishers can access the system of the invention.
Fig. 2 shows an online capture form for entering advertisement orders and sending them to an advertising management company over the Internet.
Fig. 3 is a block diagram of the system according to the invention.
Fig. 4 is a block diagram of an extraction module.
Fig. 5 is a block diagram of a filtering module.
Fig. 6 is a block diagram of a normalization module.
Fig. 7 is a block diagram of a sellers-and-buyers matching module.
Fig. 8 is a block diagram of an automated personalized presentation module.
Fig. 9 is a block diagram of an analysis module.
Figure 10 is a flow chart illustrating the complete method for preparing a classified advertisement for publication in printed media.
Figure 11 shows an example of a classified advertisement entered in natural language by a customer.
Figure 12 shows a record comprising a plurality of fields in which data units extracted from the textual content of the advertisement shown in Figure 11 are stored.
Figure 13 shows an example of a published advertisement generated from the record shown in Figure 12.

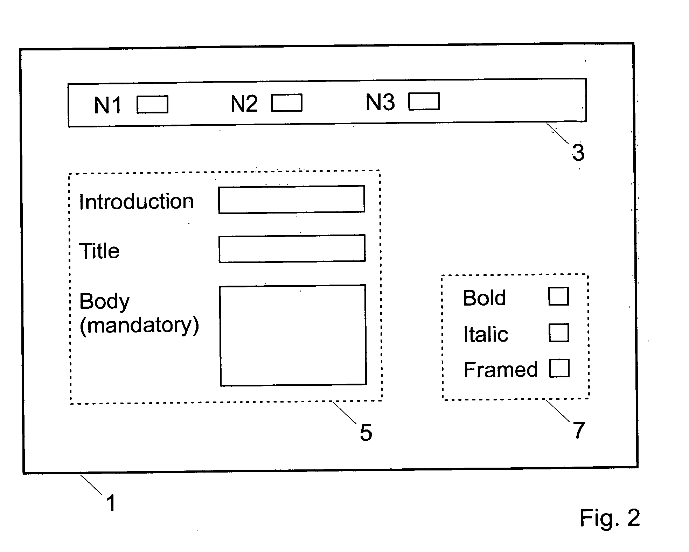

Figure 2 shows a known online capture form 1 allowing customers to enter orders for advertisements to be published in printed and/or online media and to send the order to an advertising management company. The form includes a selection portion 3 for selecting the media, for example the newspapers, magazines or web sites in which the customer wants to publish the edited classified advertisement. In the illustrated example, the customer can select three different newspapers N1, N2 and/or N3. An edit portion 5 allows the customer to enter the advertisement; only limited possibilities are available for dividing the textual content of the advertisement in a limited number of different fields, in this example three fields introduction, title and body. The data is not structured and the offer can be described in natural language in the different fields. If the form is used for selling cars, for example, there is no predefined fields for inputting the make, year or price of the car.

A formatting portion 7 may be provided for pre-formatting the advertisement. Only a limited number of formatting possibilities are available, for example in order to put part or the whole text in Italic or in Bold, or in order to frame the advertisement, as most formatting instructions will be defined by the system of the invention. In an embodiment, a logo or a picture can be uploaded for insertion in the advertisement.

As already pointed out, the invention is not limited to the extraction of structured records from advertisements captured through an online form as shown in Figure 2. Instead; the system may be used for extracting structured records from any classified advertisement captured by any means and transmitted to the advertising management company through any suitable channel. Advertisements transmitted in image mode, for example graphic computer files or facsimile, may be converted to text with a suitable OCR (Optical Character Recognition) system or combined if necessary with a pattern recognition software. Text files may be entered in the system automatically or by clerks. Orders transmitted by phone may be converted to text and entered in the system by human operators or by a speech-to-text converting system, for instance a voice and/or DTMF recognition system.

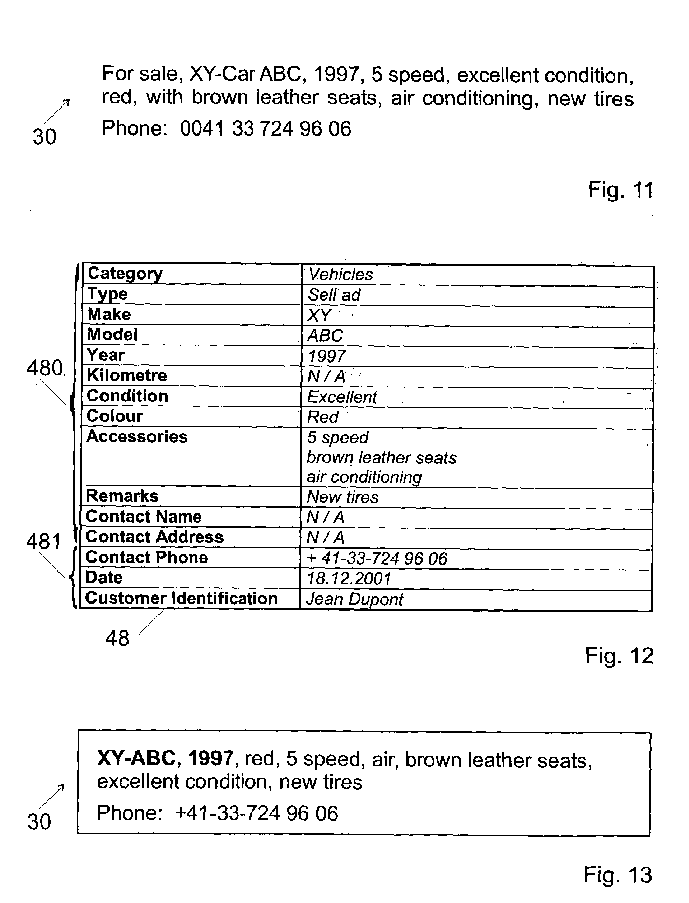

An example of advertisement expressed in natural language and which can be captured by the system is shown in Figure 11. This example includes one single sentence that could have been captured and transmitted to the advertising management company by any known means. In this case, the advertisement concerns a car offered for sale.

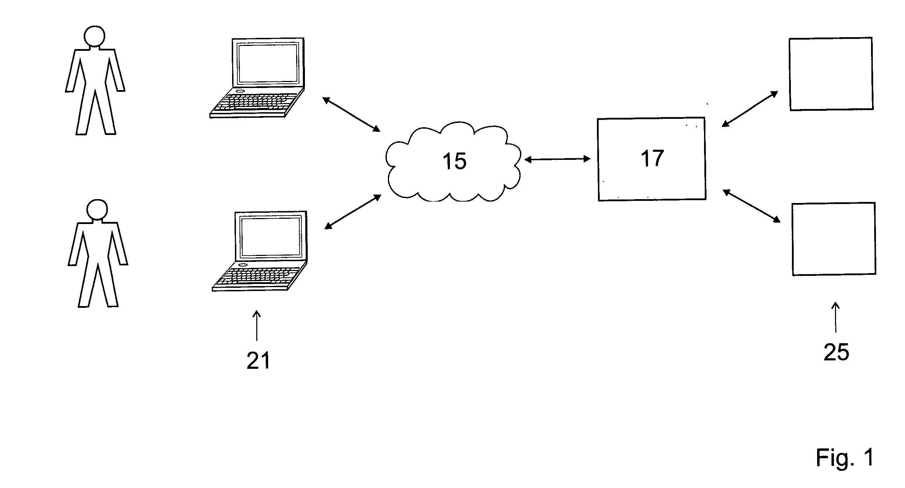

Figure 1 is a schematic diagram illustrating how various customers 21 and printed media publishers 25 can access the system of the invention. In this case, the customers 21 are real physical persons using computers; the one skilled in the art will understand that the system of the invention can also be accessed directly by other servers using a machine-to-machine dialogue.

The system of the invention includes a classified advertisement publication preparation system 17 usually comprising a general-purpose computer or computing system with a database management system. A plurality of modules is available in, or may be accessed by, the system. Each module typically comprises one or more database tables, one or more related queries, and/or one or more programs or portions of computing code portions for performing various operations involving the database tables. The system 17 is preferably operated by an advertising management company that sells advertising space to different customers on behalf of different printed media publishers 25. Remote customers 21, for example individuals or companies wishing to publish a new classified advertisement for selling or seeking a particular item, can access the system 17 over a telecommunication network, for example over the Internet 15. As will be explained later, the system 7 extracts structured records out of the advertisement expressed in natural language by the customers 21, stores them in a common database format, and adapts the textual content, the layout and/or the position of the advertisement according to the different requirements of the various publishers 25 selected by the customer 21.

The system of the invention can also be used only for extracting, storing and classifying advertisements which are not intended to be published. For example, already published classified advertisements could be extracted by this system for facilitating their retrieval or for preparing market analyses for instance.

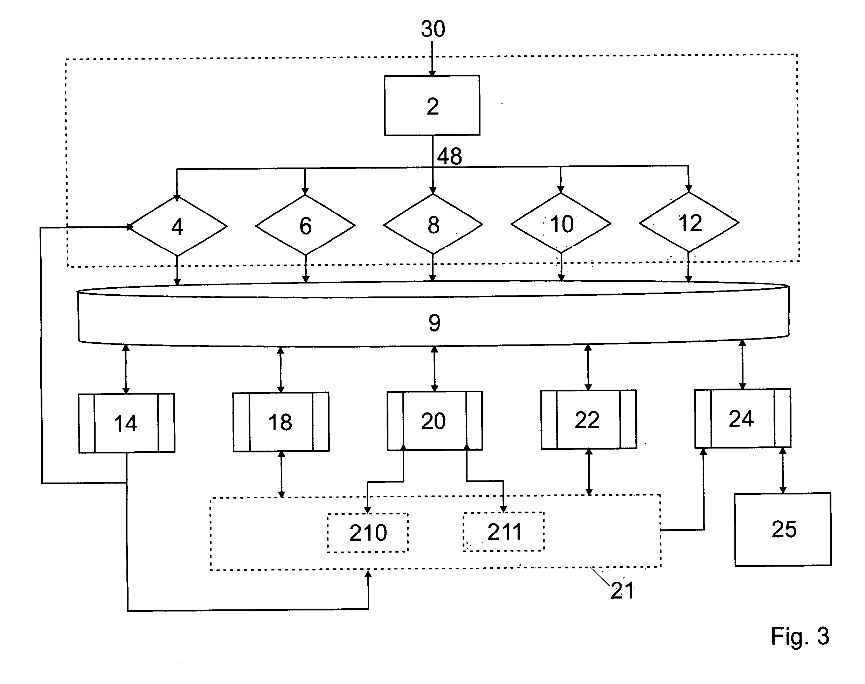

Figure 3 is a block diagram of a preferred embodiment of the classified advertisement publication preparation system 17 according to the invention.

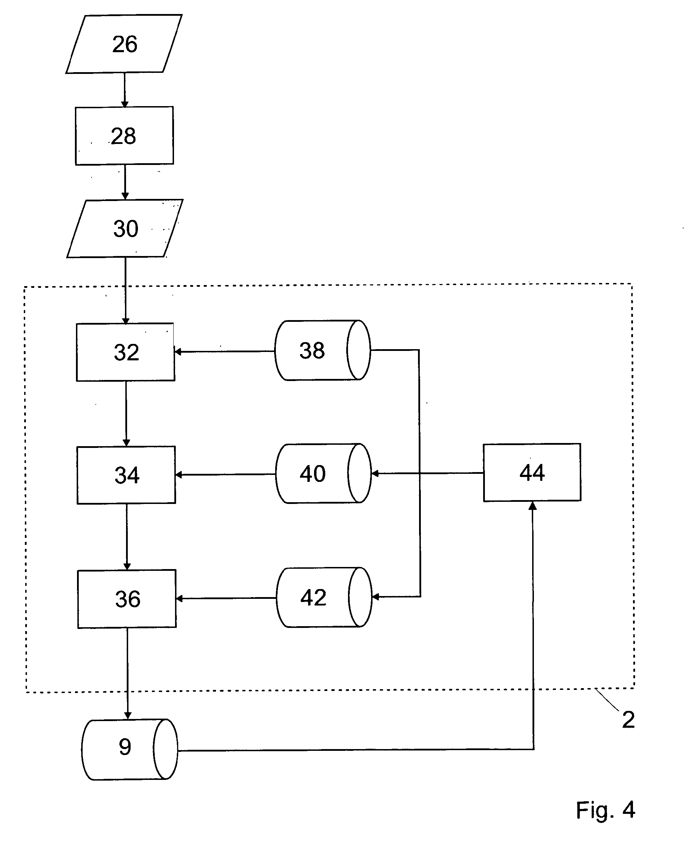

The system 17 comprises at least an extracting module 2 that will be detailed later in relation with Figure 4. The extracting module receives classified advertisements 30 expressed in one of several natural languages and captured for example with one of the methods described above, extracts structured records 48 out of said advertisements 30 and stores the records 48 in an advertisement database 9. The classified advertisements 30 comprise advertisement orders received from a plurality of customers or already published advertisements. The advertisement database 9 comprises one structured record for each advertisement that has been captured and extracted by the system. Each record 48 comprises a plurality of fields for storing and structuring the various data units extracted from each advertisement 30 processed by the system. The set of predefined fields in a record depends on the category of advertisement. For example, a vehicle advertisement will include a field for the make of the vehicle and a job offer will include a field for the name of the job. An example of record will be described later in relation with Figure 12.

The advertisement database 9 preferably comprises an intelligent database management system, including an automatic self-learning system for constantly improving the database content and rules. This system preferably performs regular database evaluations, generates patterns in order to detect special events or trends, and raises alarms when missing elements are found. In a preferred embodiment, the database is centralized and used for storing the classified advertisements published on a plurality of printed publications. This allows for a faster increase in the number of records in the database and therefore a faster learning process. Previously extracted advertisements are used for evaluating if the changes proposed by the self-learning system are appropriate, or if the change only corresponds to an exception or a mistake which is unlikely to occur again. Thus, new results and previously extracted results are simultaneously used for deciding if the rules should be adapted.

The self-learning system may for instance adapt or complete the lexicons used by the extraction module in order to add new words or to delete words which are becoming obsolete. In a preferred embodiment, the self-learning module only adds a new word in a lexicon if the word has been found in a minimum number of advertisements during a predetermined period. The self-learning module can also change, adapt or replace the semantic or syntactic rules used by the extraction module.

The system 17 further comprises a field integrity check module 4 for verifying if all the mandatory data have been captured and extracted in the record and if the value in each field is in a realistic range. The integrity can be defined in different ways for the different predefined fields. In many embodiments, the database record comprises at least one field for the price of the item that is sold or searched. The integrity will be verified only if the price given in the record is in a predefined relation with the price offered in previous advertisements for similar items in the database. Another field may contain the phone number of the customer. The integrity check module 4 could verify the format and suffix of this phone number to check if it belongs to the range of numbers associated with subscribers in the geographic area indicated by the subscriber. The integrity check module could further uses external data for verifying the integrity of the data, in order for example to check if the postal code matches the locality entered.

The integrity of each data unit can be verified either by itself - for example, by rejecting negative values for age indications- or using rules implying other data units - for example, by objecting a married marital status for a 3-year old child. The field integrity check module 4 may establish from previously captured advertisements lists of possible, impossible and rare relations between related fields; for instance, it may detect that a value bigger than 500'000 indicated for the mileage of a second-hand car is very exceptional and probably results from a mistake. In an advertisement for an apartment to rent, the module 4 may compare the price proposed by the advertiser with the price proposed in previous advertisements for apartments with a similar surface, number of rooms, situation, etc.

For each field, a realistic range of values can be computed from statistics computed for each field from previously captured advertisements for similar items. If one field contains data that seem unrealistic - such as too high a price for an item, or an unlikely phone number - the system allows the customer to replace it with more realistic data in a range proposed by the system.

In a preferred embodiment, the field integrity check module further performs a spelling and/or a grammar check. This check uses dictionaries and grammar rules in the language of the advertisement determined by the extracting module 2.

The classified advertisement prepublication preparation system 17 shown in Figure 3 further comprises a translation module 6 for automatically translating the advertisement from the language used by the customer into at least one other language selected by the customer 21 or by the publisher 25 and for storing the translation in the advertisement database 9. The translation module uses the segmentation of the advertisement into data units in order to improve the guided automatic translation. A category-dependant lexicon is preferably used, for example a different lexicon for real estate advertisement and for job offers, the suitable category being determined by the extracting module 2. The translation module 6 further preferably makes category-dependent semantic assumptions, in order to improve the quality of the translation for each category of advertisements.

An additional information providing module 8 provides additional information (when available) about the advertised item and stores this information in the advertisement database 9. The extra information may be extracted from a knowledge database (not shown) adapted to each category, from the Internet, and/or from previously captured advertisements. For real estate advertisements, the system may for example provide a map of the corresponding neighborhood. In case of an advertisement for selling a specific model of car, a datasheet of the car may be extracted from a suitable database. If the customer has only entered the locality, the module 8 may add the postal code and state. In an embodiment, the extra information is printed with the advertisement in the printed media. In another embodiment, when the advertisement is published with an electronic media, the extra information is accessible via a link from the advertisement. The extra information may be available at no cost or against a fee due by the customer (advertiser) and/or by the reader of the advertisement.

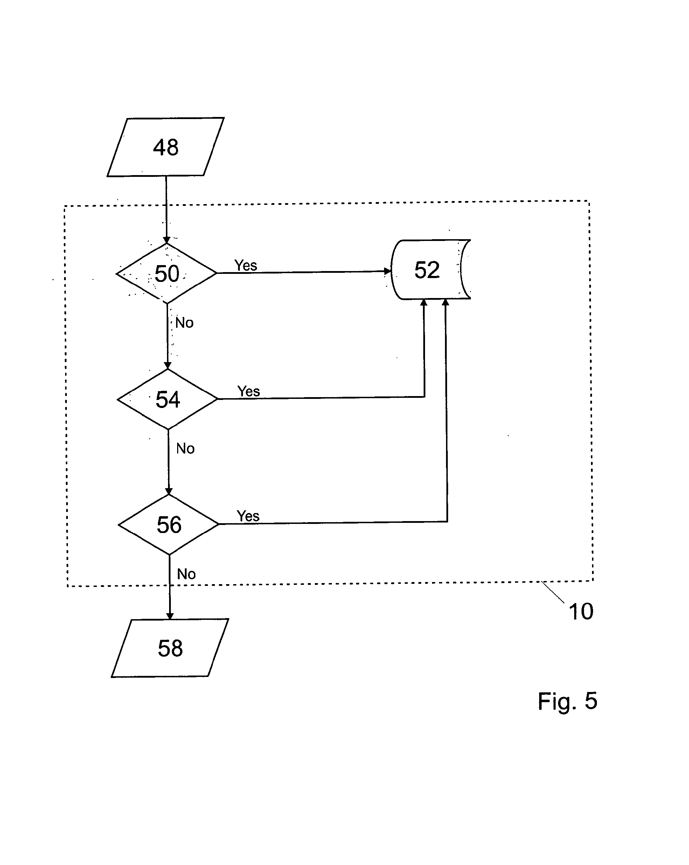

A filtering module 10 filters unwanted advertisements according to various criteria set by the advertising management company and/or by the publisher 25 of the media selected by the customer 21. For example, advertisements with a pornographic or racist content, or advertisement for alcohols or tobacco products may be banned. The filter may be selective and used only to prevent some categories of advertisements to appear in some editions or in some sections of the media. A publisher 25 can for example decide to restrain tobacco advertisements only in the junior section of his magazine. One web site may allow pornographic content only during restricted hours. The filtering module will be described more closely further below with reference to Figure 5.

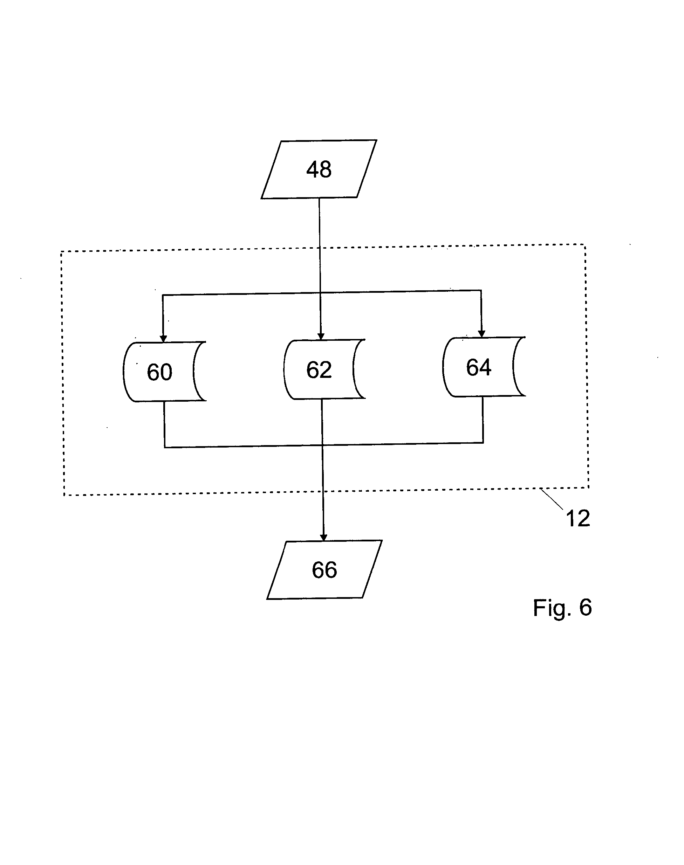

The system 17 shown in Figure 3 further comprises a normalization module 12, which will be described more closely further below with reference to Figure 6, for normalizing the extracted data units and storing similar data in the database 9 in the same way. Some changes are submitted to the customer 21 whereas other changes or errors, including spelling mistakes, may be automatically corrected when the correction is obvious and unambiguous.

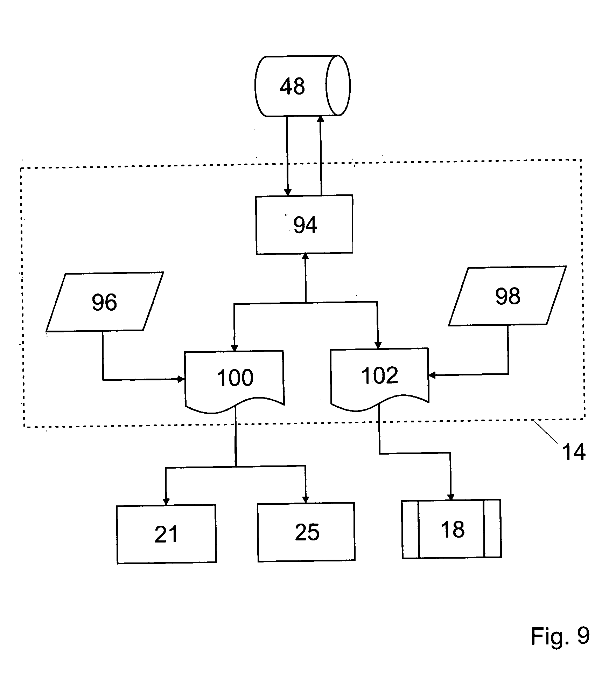

Various modules 14 to 24 are available for exploiting the records in the advertisement database 9. An analysis module 14, which will be described more closely further below with reference to Figure 9, provides statistical reports based on the textual content of the captured advertisements, which may be used e.g. for market analysis or for billing purposes. The analysis module 14 also provides reports used for improving the layout of future advertisements, including examples of advertisements in each category. In a preferred embodiment, the analysis module 14 consists of or comprises a set of predefined queries in a database system.

A data capture assistance module 18 assists the customer 21 during the online capture and editing of the classified advertisement. The assistance module 18 warns the customer 21 if the field integrity check module 4 has reported errors or inconsistencies, provides an automated translation from translation module 6, suggests additional information provided by the module 8, retrieves examples of similar advertisements, informs the customer that his advertisement has been rejected by the filtering module 10, or suggests a normalization of some fields provided by the normalization module 12.

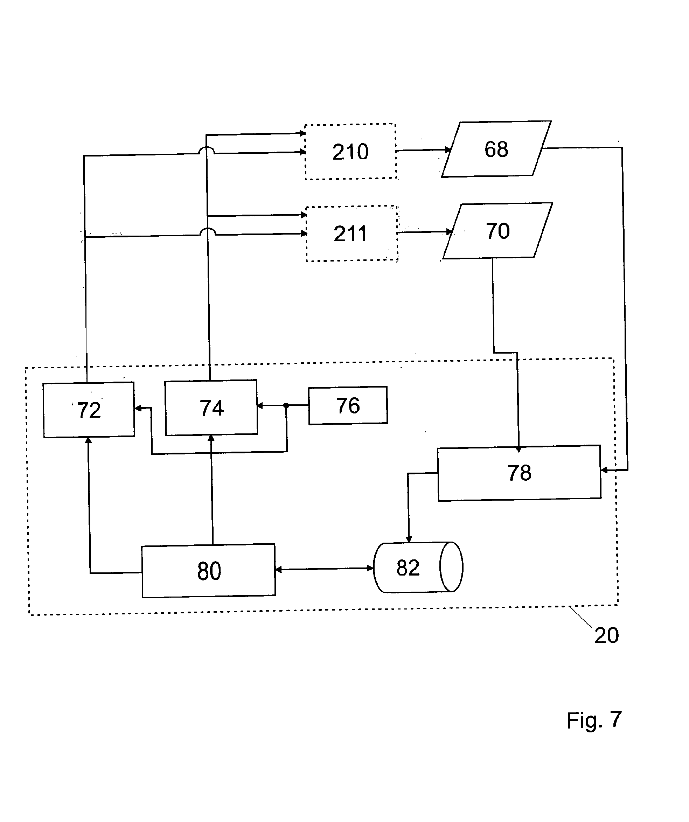

An automatic matching module 20, which will be described more closely further below with reference to Figure 7, looks for advertisements with similar key data and matches them. The module 20 may then automatically-establish a contact between buyers 211 and sellers 210 of a similar item. The contact may be established at no cost or against a fee from one or from both matching customers.

A query module 22 allows customers 21, publishers 25 and other users of the database 9 to retrieve previously captured advertisements. The module 22 can include a set of predefined queries that can be executed on the database 9. Customer or publisher queries can be entered with a web or wap browser or with any suitable network and transmitted over a wide area network to the module 22. Other queries may be transmitted for instance as a short message (SMS) over a mobile network. The customer or publisher can preferably use various search criteria for restricting the search, for example according to the category of advertisement or to a special field. The list of available search criteria depends on the advertisement category. In the default mode, the search is restricted to unexpired advertisements.

An automated presentation module 24 determines the layout of the advertisement on each selected media, depending on formatting instructions given by the customer 21 during the capture and/or by the publisher 25. The module 24 can for example automatically change the size, font, color or position of each captured field, change the sorting of the fields in the advertisement, or sort a plurality of fields to be published simultaneously according to any field. The module 24 uses style sheets, for example a set of database reports or document templates predefined by each publisher.

Figure 4 illustrates a preferred embodiment of the extracting module 2 for extracting structured records 48 from classified advertisements entered by customers 21 and storing them in the database 9. The classified advertisements 26 are first captured by any suitable capture means 28, for example with an online advertisement entry form as shown in Figure 2, manually entered by a desk operator, automatically converted into text with a text-to-speech converting system, or scanned and converted to text from a paper or film order with an optical character recognition system. The textual content of the classified advertisements 30 captured by the capture means 28 is then processed by the extracting module 2 which creates a new record 48 in the advertisement database 9 including a plurality of predetermined fields for the automatically extracted data units 480.

The extracting module consists of three main modules 32, 34 and 36:
■ The classifier module 32 first determines the language of the processed advertisements and then classifies them into a set of a priori known categories, for example real estate, vehicles, employment and the like. Each category is associated with a set of fields in which the extracted data units should be stored. The set of fields represents different features commonly found for describing the category (e.g. make, color, year, etc. for the vehicle class). The task of the classification module is to identify which set of fields has to be associated with the processed advertisement. The classifier module 32 may search characteristics 38, for example words or expressions, typical for each category, whereas those characteristics may be dynamically defined from previously categorized advertisements 46. It preferably does not rely on manually entered classifications or category codes.
■ The labeling module 34 which labels the textual content of the advertisement 30, in order to identify the data units 480 which have to be extracted (segmentation) and the fields of the record 48 they have to be associated with (tagging). Tagging is achieved by simultaneously using a specialized lexicon 40 specific for each class (e.g. a list of common makes or colors for the vehicle class), regular expressions, word-spotting techniques and relative position analysis. Formatting instructions given by the customer can be used for improving the segmentation: it is likely that an identically formatted part of a sentence corresponds to a same field.
■ The structuring module 36 transforms the tagged text into an organized data structure, concretely a record 48 in a database. This involves extracting the tagged textual data units 480, standardizing the formulations, removing inappropriate punctuation, transforming abbreviations, removing or adapting formatting instructions, etc. The structuring module 36 preferably uses contextual dictionaries 42; for example, if the car make has already been determined, a restricted list of car model names may be used, which may be spotted in the rest of the advertisement. The contextual dictionary is preferably adapted and completed with previously extracted advertisements.

The extracting module 2 further comprises a learner module 44 for adapting and improving the data 38, 40, 42. The learner module 44 uses previously successfully extracted advertisements in the database 9 for continuously improving the system.

The extracting module 2 delivers for each extracted advertisement a structured database record 48, i.e. a set of fields containing data units 480, the set depending on the category of the advertisement. An example of database record 48, corresponding to the unstructured advertisement order 30 shown in Figure 11, is illustrated in Figure 12. In this example, most data units 480 have been extracted from the advertisement 30 entered in natural language by the customer; other fields 481 may be filled by the system, for example the extraction date, an advertising customer identification, the media in which the advertisement is intended to be published, and so on.

Figure 5 illustrates a preferred embodiment of the filtering module 10 for filtering unwanted or prohibited advertisements. The filtering module 10 receives the record 48 outputted by the extraction module 2, and checks if the advertisement can be published on the media selected by the customer 21. A first test module 50 checks if the advertisement 48 belongs to a category prohibited by the publisher, for example a vehicle advertisement in a newspaper accepting only job offers. In this case, the advertisement is not published, but marked with a special flag to designate it as an unwanted advertisement 52. A feedback may be sent in order to inform the customer 21 or its advertising agency so as to allow them to prepare a new proposal. Otherwise the filtering module 10 checks during a test 54 if prohibited words, for example pornographic words, are included in one or more of the extracted fields. In a preferred embodiment, the list of prohibited words has been defined by the publisher of the media. If one or more prohibited word is included, the advertisement is stored in the list 52 of unwanted advertisements. Otherwise a test 56 is performed for checking if the advertisement must be refused for including implicit expressions that are prohibited or not wanted. The advertisement is only marked as being not prohibited when all tests 50, 54, 56 have been successfully passed.

The one skilled in the art will understand that more subtle behaviors may be programmed in the filtering module 10. For instance, a publisher 25 may reject some advertisements only in some sections of the media, but could allow the same advertisement in another section. Instead of being rejected, some unwanted advertisements might be automatically adapted or a new suggestion can be made, for example when a synonym can easily be found for a racist word or expression. Before rejection, a second chance can be given to the customer 21 for adapting his advertisement.

Figure 6 illustrates a preferred embodiment of the normalizing module 12 for normalizing the content of each field 480 of the extracted records 48. The normalizing module 12 uses specific case rules 60 for normalizing the use of upper and lower cases in similar advertisements. A rule may for example imply writing all the car makes in upper case, or "Tel" instead of "tel" or "TEL". Other rules 62 may be used for normalizing the spelling of words. Specific rules 64, including punctuation rules, ways of writing phone numbers, addresses or numerals, etc. may also be used. The rules 60, 62, 64 depend on the category of advertisement and may in a preferred embodiment depend on the selected media. The normalizing module 12 preferably uses canonic lexical and delivers a normalized record 66 for each advertisement processed. Logos, pictograms, bullets and other common signs can also be replaced by a text equivalent determined with an optical character recognition method. For instance, the image of a phone can be interpreted by the normalizing module as an equivalent to the word "phone".

Figure 7 illustrates a preferred embodiment of the sellers-and-buyers matching module 20. The module 20 receives "sell advertisements" 68 from selling customers 210 and "want advertisements" 70 from buying customers 211. A module 78 identifies the customers and retrieves their preferences from a customer database 82. The preferences may include for example the customer's address to which an eventual match should be sent, a flag indicating if such a match should be signified, and a time limit after which no further match should be signified. A module 80 searches for matching advertisements. The module 80 compares the data units in one or several fields in "want advertisements" with data units stored in corresponding fields in "sell advertisements". For example, the module 80 compares the seller's geographical area from a real estate advertisement with the geographical area indicated in "want advertisements". If the seller's area is not within the buyer's area, then there is no match; otherwise the next field can be compared. Two advertisements are considered to be matching if they concern the same category and if at least some predefined fields are matching. A match may be mandatory for some fields and only optional for others. Depending on the criteria, an exact match may be requested (for example the same make of car), or an implicit match (for example a job offer in a specific town whereas the candidate has indicated his preferences for a job in a region including the town), or an approximate match (for example a similar, but not identical job description). A thesaurus and/or geographic maps may be used to link commonly found matching words or expressions. The matching criteria are preferably predefined within the system and may be adapted by the customers. For example, the system may by default send to a customer looking for a job all the offers corresponding to his profile whereas the customer may prefer to restrict the offer to a specific region. Different matching criteria may be defined for different kinds of advertisements.

When at least one match has been found, a module 72 for connecting selling customers 210 with buying customers 211 sends a message to one or both of the customers. In an embodiment, the message is subjected to a fee. Depending on the customer's preferences, the message may be sent per e-mail, per post, per fax, per SMS, etc. A message is only sent if the response times 76 indicated by the selling customer 210 and by the buying customer 211 have not expired.

A message is preferably sent by a nonmatching indicating module 74 even if no match has been found in the database for a particular advertisement. This information may be delivered at no cost or for a lower fee than a matching indication.

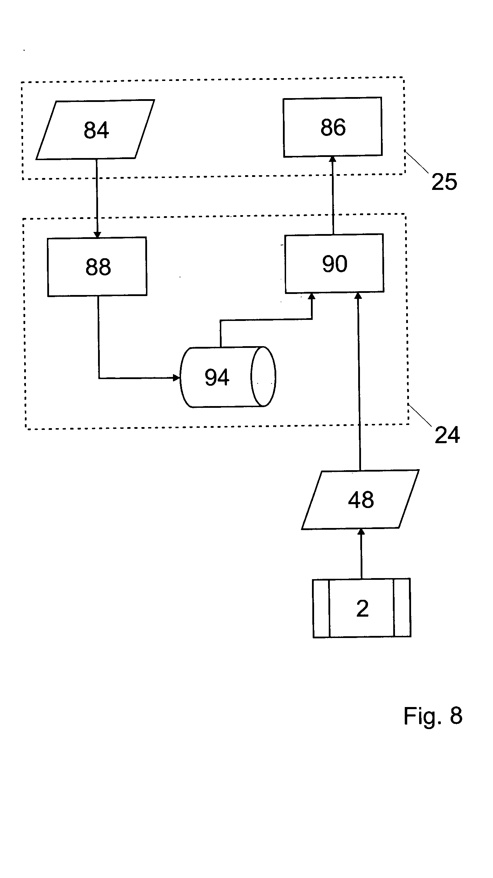

Figure 8 illustrates a preferred embodiment of the automated personalized presentation module 24. The module 24 adapts the layout and/or the position of the advertisement for a specific publisher 25 according to the wishes of this publisher. One structured advertisement record 48 generated by the extracting module 2, or several records intended to be published in the same edition, are delivered to a module 90 for generating one or several personalized presentations 90. An example of advertisement corresponding to the record illustrated in Figure 12 and with a personalized format is shown in Figure 13. The format includes a Bold emphasis on some words, a frame around the advertisement and a new sorting of the fields.

The module 90 uses predefined style sheets, for example database reports or word processing templates, stored in a repository 94. The publishers 25 can send requests 25 for generating new style sheets or adapting existing style sheets. A style sheet can for example define the font, size, color and position used for each extracted field in a record, and the sorting or grouping criteria for sorting and grouping several advertisements to be published in the same edition of the publisher's media. The personalized advertisement document is sent preferably over a remote communication network to the publisher(s) 25 selected by the customer for use in the publication process 86.

Figure 9 illustrates a preferred embodiment of the advertisement analysis module 14. The module 14 includes a set of queries 94 which can be executed on the database 9 of extracted advertisements, reporting means 100 for preparing statistical reports on the content of the advertisements, and reporting means 102 for preparing reports on the presentation of the advertisements as well as examples of presentations. The reporting means 100 use content models 96 whereas the reporting means 102 use presentation models 98. The reports on the content include for example statistics on the data units extracted from the advertisements, for example the average prices for various models of cars, the number of job offers, etc., and statistics including fields added by the system, for example the number of advertisements published by each customer, and so on. The content statistics can be used by the advertising management company operating the system, for example for marketing purposes or for selling market studies to third parties, by the customers 21, and/or by the publishers 25. The presentation statistics are primarily used by the computer-aided capture module 18 for assisting the customer during the capture of the advertisement with examples and statistics on previous advertisements for similar items.

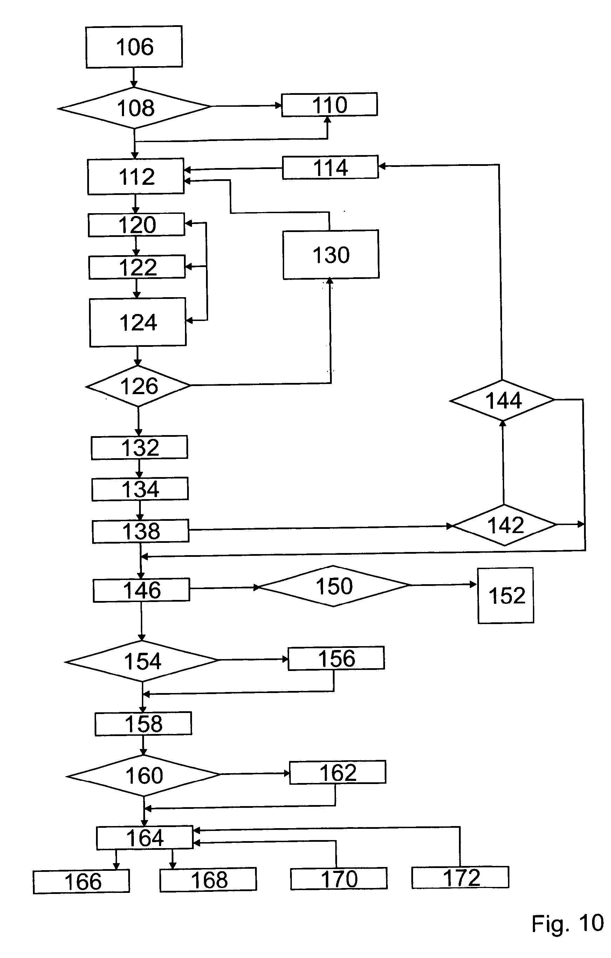

Figure 10 illustrates with a flow chart a preferred embodiment of the method of the invention. The method starts with a step 106 for entering in natural language the textual content 30 of the advertisement. If a help for the preparation of the advertisement is possible - for example when the advertisement offer is prepared with a computer system, for example with a remote computer connected through a line connection to the database 9 - and needed (test 108), the module 18 is used for assisting the advertising customer 21 during the edition of the advertisement with examples and corrections, as described above (step 110).

Once the advertisement 30 has been entered, it is captured in the system, for example transmitted or scanned and stored (step 112). The extraction process, including a language determination and classification step 120, a labeling step 122 and a structuring step 124, can then be carried out in order to extract a record 48 including data units 480 from the advertisement 30. The field integrity check module 4 checks during step 126 if all the mandatory data have been entered or if some key data are missing. The module 4 may also detect data which are hard to understand or rarely used, for example unusual acronyms. If this test fails, and if the advertisement has been captured online, an opportunity to enter supplementary data is provided (step 130). The result of the check 126 is preferably displayed to the customer during a step 132.

The extracted data units 48 are then normalized by the normalizing module 12 during the step 134. The field integrity check module 4 checks during step 138 if the integrity of the data is verified. If some data units are considered to be unrealistic, the system preferably suggests other values, based for example on previously captured advertisements, during a step 144. A spelling and/or grammar correction is performed. After this check, the process goes further with the filtering step 146.

During the filtering step 146, the filtering module 10 checks if prohibited or unwanted data are included in the captured record 48 (test 150). If this is the case, the record is marked or stored in a special database, and will not be published (step 152). Otherwise the process goes on further with step 154.

During step 154, the additional processing information module 8 checks if additional information is available and if it should be added to the record. In that case, the additional information is added to the record 48 (step 156). The structured record is then stored in the database of successfully captured advertisements (step 158).

During step 160, the translation module 6 checks if a translation of the advertisement has been requested by the customer 21 and/or by the publisher 25. In this case, an automatic translation in the N requested languages is performed during step 162, which provides N translated versions of each data unit (step 164).

The record 48 captured and modified during the steps 112 to 164 can be used by the analysis module 14 for preparing a statistical analysis on the content and/or on the layout of the advertisements (step 166). Queries can be entered and executed during step 168 by the module 22 for retrieving previously captured advertisements. During step 170, a document with an automated personalized presentation is prepared by the automated presentation module 24 and sent to the publishers 25. During step 172, the automatic matching module 20 performs an automated matching of corresponding advertisements.

In a preferred embodiment, the system of the invention comprises a text-to-speech converting module for converting the textual content of the advertisements into a spoken advertisement. A voice menu system can be used for selecting and accessing the advertisements stored in the database 9 with a conventional phone handset, for example.

Although the extraction system of the invention has been described here as a part of a whole system for preparing classified advertisements for publication in printed media, the one skilled in the art will understand that this extraction system can also be used and sold alone, independently of any other system. For example, this system can be used for.only extracting data units out of classified advertisements in order to store, classify, transmit or organize existing collections of classified advertisements.

## Claims

1. A method for preparing classified advertisements for publication in printed media, comprising the steps of:
capturing (112) at least the textual content (30) of each classified advertisement expressed in natural language,
automatically extracting (120-124) a plurality of data units (480) out of said textual content (30) and storing each data unit into a corresponding field of a record (48) in an advertisement database (9),
controlling the textual content, the layout and/or the position of the classified advertisements in said printed media based on the content of said advertisement database.

2. The method of claim 1, further comprising a step of automatic determination of the language of said textual content.

3. The method of one of the claims 1 or 2, further comprising a step of spelling check of said textual content.

4. The method of one of the claims 1 to 3, said extracting step including a preliminary step (120) of automatically classifying advertisements into predetermined advertisement categories.

5. The method of one of the claims 1 to 4, said extracting step including a step (122) of automatically labeling said textual content, in order to segment said textual content into said data units (480) and to identify said fields they have to be associated with.

6. The method of claim 5, wherein said step of labeling is performed using a lexicon (40) depending on said advertisement category.

7. The method of one of the claims 5 or 6, wherein said step of labeling is performed using predetermined syntactic and/or semantic rules.

8. The method of one of the claims 5 to 7, further comprising the step of adapting said lexicon and/or said rules when new advertisements have been captured.

9. The method of one of the claims 5 to 8, wherein said step of labeling is performed using the format, position and/or layout of the classified advertisements.

10. The method of one of the claims 1 to 9, including a step (134) of normalizing said data units (480) in order to store similar data in a similar way.

11. The method of one of the claims 1 to 10, including a step (126) of informing the advertising customer (21) if mandatory data units are missing or if the data are expressed in a way which is hard to understand.

12. The method of one of the claims 1 to 11, wherein the final form of the textual content adapted to publication requirement, the layout and/or the position of said classified advertisements depends on data units (480) in said database previously extracted out of the textual content of previous advertisements.

13. The method of one of the claims 1 to 12, wherein said electronic database includes data units (480) extracted out of classified advertisements published on online media.

14. The method of one of the claims 1 to 13, including a step (106) of entering said textual content into a remote processing system and transmitting said textual content over a telecommunication network to said database (9).

15. The method of one of the claims 1 to 13, wherein said advertisements are captured by scanning printed paper or film orders and by analyzing the resulting bitmaps using pattern recognition or optical character recognition techniques.

16. The method of one of the claims 1 to 13, wherein said advertisements are captured by a voice and/or DTMF recognition system.

17. The method of one of the claims 1 to 16, wherein the textual content of previous classified advertisements is used for assisting the user when unrealistic values are stored in the data units (480) stored in at least one of said fields.

18. The method of claim 17, wherein the price proposed in each said classified advertisements is compared with the price indicated in previous classified advertisements for similar items in said advertisement database (9), a feedback being sent to the advertising customer when the price proposed in the new classified advertisement is not in a given relation with the price indicated in previous classified advertisements for similar items.

19. The method of one of the claims 1 to 18, wherein the integrity of each data unit is verified either by itself or using rules implying other data units.

20. The method of one of the claims 10 to 19, wherein said normalizing step (134) is based on canonic lexica.

21. The method of one of the claims 1 to 20, wherein a content analysis is performed on said textual content for filtering out (146) unwanted classified advertisements.

22. The method of one of the claims 1 to 21, wherein the textual content of previous classified advertisements is used for preparing a guided translation (160, 162) of the new classified advertisement.

23. The method of one of the claims 1 to 22, wherein a plurality of classified advertisements successively captured are sorted (170) according to at least one of said fields and published in that order in the same edition of the same media.

24. The method of one of the claims 1 to 23, further comprising a step (156) of providing the advertising customer (21) with extra information about his classified advertisement.

25. The method of one of the claims 1 to 24, further comprising a step (166) of computing statistics from sets of extracted classified advertisements.

26. The method of one of the claims 1 to 25, further comprising a step (172) of automatically matching corresponding "want advertisements" with "sell advertisements".

27. The method of one of the claims 1 to 26, further comprising a step of converting at least one of said records in said advertisement database (9) into speech with a text-to-speech conversion module.

28. A method for preparing market analysis, comprising the steps of:
capturing (112) at least the textual content (30) of a plurality of classified advertisements expressed in natural language by a plurality of advertising customers (21) in an electronic processing system,
automatically extracting (120, 122, 124) data units (480) out of said textual content and storing said data units into a record (48) comprising a set of predetermined fields in an advertisement database (9),
establishing statistics and/or reports (166) with said electronic database, and using said reports for said market analysis.

29. A data processing system (17) for processing classified advertisements for publishing in printed media, comprising:
an extracting module (2) for automatically extracting a plurality of data units (480) out of the textual content (30) of classified advertisement orders entered in natural language from a plurality of advertising customers (21),
a database (9) for storing said data units (480) in a corresponding plurality of fields of a record, a plurality of predefined queries (24) being stored in said database for controlling the textual content, layout and/or position of said classified advertisement in said printed media.

30. The data processing system of claim 29, further comprising advertisement order receiving means (28) for receiving classified advertisement orders (26) from a plurality of advertising customers (21), wherein said order receiving means is adapted to display to said advertising customers information depending on data units (480) in said database (9) . previously extracted out of the textual content of previous advertisements.

31. The data processing system of claim 29, further comprising means for sending extracted data units to a plurality of different publishers (25) selected by said advertising customer (21).

32. A computer program product stored on a computer-usable medium comprising computer-readable program means for causing said computer to perform the steps of one of the claims 1 to 28.
